# EUROPÄISCHE PATENTANMELDUNG

(11) **EP 2 100 499 A1**
(43) Veröffentlichungstag der Anmeldung: **16.09.2009**
(21) Anmeldenummer: 08011651.0
(22) Anmeldetag: 27.06.2008
(51) Int. Cl.: A01G 9/14, A01G 9/24

(54) **Mobile Beregnungseinrichtung für Pflanzentransportwagen**

(30) Priorität: 09.07.2007 DE 202007009804 U
(71) Anmelder: Voß, Holger, 06188 Niemberg OT Eismannsdorf (DE); Gawlik, Andreas, 06188 Niemberg OT Eismannsdorf (DE)
(72) Erfinder: Voß, Rainer, 06188 Niemberg OT Eismannsdorf (DE)
(74) Vertreter: Gulde Hengelhaupt Ziebig & Schneider

(57) **Zusammenfassung**

Mit der mobilen Beregnungseinrichtung sind insbesondere die, in genormten Abmessungen weit verbreitet genutzten, sogenannten CC-Containerwagen bewässerbar.

Die CC-Containerwagen bzw. Pflanzentransportwagen sind mindestens von einer Seite der Beregnungseinrichtung in diese einfahrbar, und ein vertikal heb- und senkbarer als horizontaler Sprührahmen ausgebildeter mit Düsen bestückter Beregner kann mit einstellbarer Geschwindigkeit und in ausreichender Höhe die in den einzelnen Etagen positionierten Pflanzen beregnen.

Die Einrichtung ist dadurch gekennzeichnet, dass ein Vertikalrahmen (1) an seinen Längsseiten mit je einem Halterahmen (10) in Verbindung steht und diese gemeinsam auf einen nach vom offenem Grundrahmen (5) angebracht sind, wobei innerhalb des umfassten Raumes ein Sprühdüsenrahmen (6)- definiert in einer durch Endschalter begrenzten Hubstrecke - vertikal elektromotorisch heb- und senkbar angeordnet ist und der Sprühdüsenrahmen (6) in C-Profilen für ein Laufwerk (2), welche an den vertikalen Längsseiten - nach hinten und nach aussen weisend- am Vertikalrahmen (1) angebracht sind, geführt ist.

## Beschreibung

Die Erfindung betrifft eine mobile Beregnungseinrichtung für Pflanzentransportwagen.

Mit der mobilen Beregnungseinrichtung sind insbesondere die, in genormten Abmessungen weit verbreitet genutzten, sogenannten CC-Containerwagen bewässerbar.
Die CC-Containerwagen bzw. Pflanzentransportwagen sind mindestens von einer Seite der Beregnungseinrichtung in diese einfahrbar, und ein vertikal heb- und senkbarer als horizontaler Sprührahmen ausgebildeter mit Düsen bestückter Beregner kann mit einstellbarer Geschwindigkeit und in ausreichender Höhe die in den einzelnen Etagen positionierten Pflanzen beregnen.

Beregnungsanlagen, die auf landwirtschaftlichen Flächen zur künstlichen Bewässerung eingesetzt werden, sind als stationäre oder mobil mit Schleppfahrzeugen verfahrbare bekannt.
Darüber hinaus besteht das Erfordernis, zum Transport oder zur Verkaufspräsentation auf Pflanzentransportwagen eingestapelte Gemüse- und Blumenpflanzware bzw. in Pflanzgefäßen vorhandene Obst- und/oder Ziergehölze über einen bestimmten Zeitraum mit ausreichender Feuchtigkeit möglichst zielgerichtet zu versorgen. Letztere Handhabung geschieht in der Regel noch oft mittels Handbrause und es ist der Erfahrung des Bedieners überlassen, welche Wassermenge aufgebracht wird. Dieses Verfahren ist aus Gründen des nicht optimal ausgebrachten bzw. verteilten Wasservolumens und aus dem Grund einer zeitlich und personell sehr aufwändigen Arbeitsweise nicht mehr zeitgemäß. Spritzwasserverluste, Verunreinigungen unter den und in der Nähe der beregneten Pflanzentransportwagen sowie eine hinderliche Arbeit für den Bediener durch ggf. lange Schlauchwege sind daraus hinlänglich bekannte Erfahrungen. Nicht zuletzt ist es auch für die Kundschaft, die sich in den betreffenden Arealen eines Baumarktes oder eines Gartenfachbetriebes aufhält, behindernd, wenn um ausgerollte Wasserschläuche mit Einkaufswegen herumgefahren werden muss.

Nachfolgend soll, stellvertretend an einigen Beispielen des Standes der Technik, der gegenwärtig bekannte Entwicklungsstand von Beregnungs- bzw. Bewässerungseinrichtungen dargelegt werden.

So ist nach DE 86 120 78 zum Einsatz auf größeren landwirtschaftlichen Flächen ein Regnerwagen mit einer vorbestimmten Neigung der Regnerdüsen für eine Beregnungsanlage bekannt.
Von einem Schlauchwagen, der separat neben der eigentlichen Beregnungsanlage seine Position hat, wird eine Schlauchzuführung zum Beregner geführt, der sich auf einem Chassis befindet und im Wesentlichen aus einer Halterung mit einer darauf drehbar angeordneten Regnerdüse besteht. Letztere kann, in bestimmtem Winkel einstellbar, sequentiell im Umkreis fortschreitend eine vorbestimmte Feldfläche beregnen. Nach einer ausreichenden Bewässerung muss die gesamte Anlage aufwändig den Standort wechseln bzw. es sind mehrere Regnerwagen im Einsatz, deren Beregnung nach Bedarf zugeschaltet oder beendet wird.

Eine mit der Erfindung entfernt vergleichbare Lösung besteht nach DE 42 39 259 A1. Die beschriebe Einrichtung zum Waschen von Teilen besteht aus einer an sich geschlossenen Waschkabine, wobei mittels geeigneter Zugmittelantriebe Sprühdüsen entweder vertikal oder horizontal verfahren werden, um dadurch allseitig, z. B. ein verschmutztes Maschinenbauteil, zu reinigen. Prinzipiell können hierdurch alle Seiten eines derartigen Bauteils überdeckend behandelt werden.
Für eine Anwendung zur Bewässerung von in Pflanzentransportwagen eingestapelter Pflanzware ist diese Einrichtung nicht geeignet, da mit der beschriebenen Lösung die Sprührichtung mehr oder weniger diffus ist.
Der hohe Spritzwasseranfall und der zu hohe Wasserdruck sind für den erforderlichen Zweck einer Pflanzenbewässerung völlig inakzeptabel.

Eine bekannte Konstruktion, die die sogenannten CC-Container nutzt, um eine Bewässerung eingestapelter Pflanzware modifiziert von unten mittels Eintauchen des jeweiligen Pflanztopfs in eine Wasserwanne durchzuführen, bietet die Lösung der Fa. TKS Transportmittel GmbH, Surwold. Die Anstauhöhe des Feuchtigkeit spendenden Wassers kann entsprechend der Größe der eingehangenen Wannen variieren und es ist ggf. möglich, die derart ausgerüsteten CC-Container oder in einer anderen Größe (Höhe, Breite) modifizierten Ausführungen vor Ort mit einem elektronisch gesteuerten Wasserzulauf zu koppeln. Beim Transport von Leergut werden die Wasserwannen umgedreht in die erweiterten/modifizierten CC-Container übereinander abgelegt.

Ein Hauptnachteil ist, dass aus der Sicht eines Gartenbaufachmannes die eingestapelten Pflanztöpfe nebst Pflanzen während ihrer Verkaufspräsentation immer" im Wasser stehen ". Es ist hinlänglich bekannt, dass sogenannte "stauende Nässe" für die meisten Gemüse- und Blumenpflanzen überaus schädlich ist.
Außerdem ist es - wie bereits angedeutet - nicht möglich, Transporte der modifizierten CC-Container mit gefüllten Wasserwannen durchzuführen. Die eingestapelte Pflanzware muss auf herkömmliche Art zur Transportvorbereitung mittels Handbrause und Schlauch befeuchtet werden.

Es ist somit Aufgabe der Erfindung, ein technologisch vereinfachtes Bewässerungskonzept von zu transportierender oder auszustellender Pflanzware mittels einer neuartigen Einrichtung vorzuschlagen, die die Nachteile des Standes der Technik überwindet, einfach in der Handhabung ist, dabei die bekannten CC-Container weiterhin nutzt und außerdem die Kosten menschlicher Arbeit einspart und energieeffizient arbeitet. Die Einrichtung soll einfach aufgebaut und robust sowie vor Ort und für Transportzwecke leicht verschieblich bzw. leicht de- und montierbar sein.

Erfindungsgemäß wird die Aufgabe durch die im Kennzeichen des 1. Patentanspruches angegebenen Merkmale gelöst. Die weitere Ausgestaltung der Erfindung ergibt sich aus den Patentansprüchen 2 bis 7.

Folgende ergänzende Hinweise zur erfinderischen Lehre sind erforderlich.

Die mobile Beregnungseinrichtung besteht zunächst aus einer metallischen Rahmenkonstruktion, die an der Vorderseite einen freien Zutritt, d. h. das Einfahren eines Pflanzentransportwagens ermöglicht und im Übrigen derartige Abmessungen aufweist, dass der Pflanzentransportwagen einen definierten Abstand zu den Seitenwänden und einer Rückwand einnimmt und er von den Seitenwänden und der Rückwand etwa zu einem Viertel bis zu einem Drittel seiner Höhe überragt wird, wobei seine nach außen weisende Rückfront eine Flucht mit dem Eingang der mobilen Beregnungseinrichtung bildet.
Im Innern und in horizontaler Anordnung der mobilen Beregnungseinrichtung befindet sich ein viereckiger Sprührahmen, bestehend aus einem geschweißten Kastenhohlprofil oder einem mit kleinen Radien gebogenem Rohr, welcher über die gesamte Höhe der mobilen Beregnungseinrichtung über ein Laufwerk an der Rückwand elektromotorisch oder einem anderen geeigneten Antrieb, insbesondere funkferngesteuert, in eine untere bzw. eine obere Endlage verfahren wird. Die Geschwindigkeit des Verfahrens des Sprührahmens ist entsprechend einstellbar. Der Sprührahmen besitzt in definiertem Winkel nach innen - in Richtung der eingestapelten Pflanzware - gerichtete Düsen für einen feinstrahligen Wasseraustritt, wobei ihre Reichweite derart bemessen ist, dass von jeder Sprührahmenseite mehr als die Hälfte der Regalfläche mit der eingestapelten Pflanzenware überstrichen wird.
An der mobilen Beregnungseinrichtung sind bodenseitig mehrere allseitig schwenkbare Rollen oder Räder angebracht und an einem Grundrahmen, welcher sich unten an der Beregnungseinrichtung befindet, Distanzelemente zur genauen Positionierung eines eingeschobenen Containers angeordnet.
Die Seitenwände stehen mit dem Grundrahmen über Steck-/Schraubverbindungen lösbar in Verbindung. Die Rückwand ist am Grundrahmen mit einem oder mehreren Scharnieren sowie über verschraubbare Distanzhalter mit den aufgestellten Seitenwänden verbunden.
Die Seitenwände und die Rückwand sind mit durchscheinenden oder undurchsichtigen Flächen zum Zwecke des Spritzschutzes ausgestattet. Die genannten Rahmenelemente und der Sprühdüsenrahmen können auch aus bruchfesten Kunststoffhohlprofilen bestehen.

Zum Betrieb der mobilen Beregnungsanlage bedarf es des üblicherweise vorhandenen Leitungswasserdruckes.

Es ist auch denkbar, durch einen Zusatztank und eine Pumpe, wobei deren Steuerung über die ohnehin vorhandene Elektronik erfolgt, Desinfektionslösungen zu versprühen, damit Regalcontainer und die Beregnungsanlage selbst von Zeit zu Zeit desinfiziert werden können.

Die Erfindung soll nunmehr anhand eines zweckmäßigen Ausführungsbeispiels näher erläutert werden.
Dazu wird auf die nachfolgend genannte Figur zurückgegriffen.

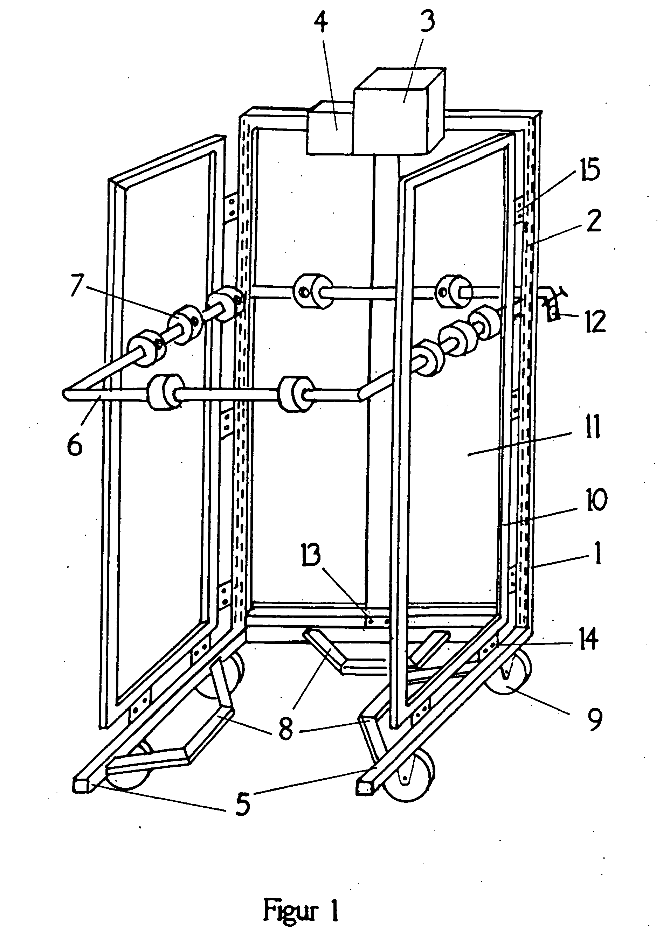

- Figur 1:: Perspektivische Darstellung der im vorderen Bereich offenen mobilen Beregnungseinrichtung

Die verwendeten Bezugszeichen bedeuten:

| | |
|---|---|
| 1 - Vertikalrahmen | 6 - Sprühdüsenrahmen |
| 2 - C-Profile für Laufwerk | 7 - Düsen |
| 3 -Getriebemotor | 8 - Distanzelement |
| 4 - Steuerung | 9 - Rollen |
| 5 -Grundrahmen | 10 - Halterahmen |
| 11 - Schutzfläche | |
| 12 - Wasserzuführung | |
| 13 - Scharnier | |
| 14 - Steck-/Schraubverbindung | |
| 15 - verschraubbare Distanzhalter | |

Gemäß Figur 1 ist die mobile Beregnungseinrichtung so ausgelegt, dass ein CC-Container in ihrem Inneren vollständig Platz findet, wobei seine genaue Einfahrposition mittels z. B. dreier Distanzelemente 8 festgelegt ist. Die beiden Halterahmen 10 und der Vertikalrahmen 1 - letzterer trägt, mittig an seinem oberen Ende angeordnet, einen Getriebemotor 3 nebst einer Steuerung 4 - sind miteinander über verschraubbare Distanzhalter 15 verbunden, wobei sie sich auf einem nach vorn geöffneten Grundrahmen 5 abstützen. Der Vertikalrahmen 1 besitzt an seinen vertikalen Längsseiten - nach außen und nach hinten weisend - aufgesetzte C-Profile für ein Laufwerk 2, wodurch ein Sprühdüsenrahmen 6 innerhalb einer Hubstrecke, die von Endschaltern begrenzt ist, vertikal bewegt wird, wobei der obere Endpunkt so gewählt ist, dass der ein Quadrat oder in der vorliegenden Ausbildung ein Rechteck einfassende Sprühdüsenrahmen bis über einen eingeschobenen CC-Container hinaus verfahrbar ist und damit auch die zuoberst eingestapelte Pflanzenware optimal beregnet wird. Damit besteht keinerlei Behinderung beim Ein- und Ausfahren eines CC-Containers. Der Sprühdüsenrahmen 6 weist einen Winkel von ca. 45° nach innen - zur eingestapelten Pflanzware - gerichtete Düsen 7 auf, durch welche feine Wasserstrahlen - sich von vier Seiten überdeckend - austreten.
Die langen Seiten des Sprühdüsenrahmens 6 besitzen mindestens 3 aufgesetzte Düsen 7 und die kürzeren Seiten mindestens 1. Der Vertikalrahmen 1 und die beiden Halterahmen 10 nehmen zum Zwecke des Spritzschutzes Schutzflächen 11 auf, die z. B. aus Plexiglas bestehen können. Die mobile Beregnungseinrichtung insgesamt ist beispielsweise auf vier allseitig drehbeweglichen Rollen 9 oder Rädern gelagert. Es ist auch denkbar, die bewegliche Beregnungseinrichtung stationär zu betreiben und manuell in Einzelbeschickung zu bedienen oder aber auch - insbesondere an Wochenenden oder an Feiertagen - bei Vorhandensein von mehreren mobilen Beregnungseinrichtungen alle vorhandenen CC-Container in mobilen Beregnungseinrichtungen einzuparken und elektronisch über Zeitschaltuhren zu bewässern.

Zur Durchführung eines größeren Ortswechsels können die Halterahmen 10 demontiert werden und der Vertikalrahmen 1 wird mittels eines oder mehrerer Scharniere 13 nach vorn umgeklappt.

Die Vorteile der Erfindung werden zusammenfassend darin gesehen:
- optimale, nach Bedarf ausgerichtete Pflanzenbewässerung
- Vermeidung stehender Nässe in den Pflanzgefäßen
- Einsparung von Arbeitszeit des eingesetzten Bedienerpersonals und von Kosten des Trinkwasserverbrauchs
- keine Behinderung durch umherliegende, ausgerollte Gartenschläuche bzgl. der Einkaufswagen von Kunden
- die bekannten und in Europa verwendeten CC-Container können, baulich unverändert, weiterhin benutzt werden.

## Patentansprüche

1. Mobile Beregnungseinrichtung für Pflanzentransportwagen, **gekennzeichnet dadurch, dass** ein Vertikalrahmen (1) an seinen Längsseiten mit je einem Halterahmen (10) in Verbindung steht und diese gemeinsam auf einen nach vorn offenem Grundrahmen (5) angebracht sind, wobei innerhalb des umfassten Raumes ein Sprühdüsenrahmen (6) - definiert in einer durch Endschalter begrenzten Hubstrecke vertikal elektromotorisch heb- und senkbar angeordnet ist, wobei der Sprühdüsenrahmen (6) in C-Profilen für ein Laufwerk (2), welche an den vertikalen Längsseiten- nach hinten und nach außen weisend - am Vertikalrahmen (1) angebracht sind, geführt ist.

2. Mobile Beregnungseinrichtung nach Anspruch 1, **gekennzeichnet dadurch, dass** der Grundrahmen (5) nach innen gerichtete Distanzelemente (8) aufweist.

3. Mobile Beregnungseinrichtung nach Anspruch 1, **gekennzeichnet dadurch, dass** der Sprühdüsenrahmen (6) eine definierte Anzahl aufgesetzter und in einem Winkel von bis zu 45 ° nach innen gerichteter Düsen (7) besitzt.

4. Mobile Beregnungseinrichtung nach Anspruch 1 und 3, **gekennzeichnet dadurch, dass** der Sprühdüsenrahmen (6) über einen funkferngesteuerten Getriebemotor (3) verfahren wird.

5. Mobile Beregnungseinrichtung nach Anspruch 1, **gekennzeichnet dadurch, dass** der Vertikalrahmen (1) und die Halterahmen (10) mit Schutzflächen (11) versehen sind.

6. Mobile Beregnungseinrichtung nach Anspruch 1, **gekennzeichnet dadurch, dass** am Grundrahmen (5) allseitig drehbewegliche Rollen (9) angebracht sind.

7. Mobile Beregnungseinrichtung, die auch im stationären Betrieb verwendet wird und im Falle einer Transportsituation in ihren Hauptteilen, wie Vertikalrahmen (1), Halterahmen (10) und Grundrahmen (5) montier- und demontierbar ist.
